# EUROPEAN PATENT APPLICATION

(11) **EP 4 513 101 A1**
(43) Date of publication of application: **26.02.2025**
(21) Application number: 22938282.5
(22) Date of filing: 18.11.2022
(51) Int. Cl.: F24F 11/86, F24F 11/30, F24F 11/64

(54) **ACTIVE REDUNDANT AIR CONDITIONING UNIT AND CONTROL METHOD**

(30) Priority: 20.04.2022 CN 202210417226
(71) Applicant: CRRC Qingdao Sifang Co., Ltd., Qingdao, Shandong 266111 (CN)
(72) Inventor: PU, Dong, Qingdao, Shandong 266111 (CN); ZHOU, Xinxi, Qingdao, Shandong 266111 (CN); XU, Meng, Qingdao, Shandong 266111 (CN); YANG, Xiaoyan, Qingdao, Shandong 266111 (CN); JIANG, Haoli, Qingdao, Shandong 266111 (CN)
(74) Representative: Prinz & Partner mbB
(86) International application number: PCT/CN2022/132835
(87) International publication number: WO 2023/202063

(57) **Abstract**

An active redundant air conditioning unit and control method. The active redundant air conditioning unit comprises a controller and a plurality of groups of mutually independent refrigeration circulation loops. Each group of refrigeration circulation loops at least comprises a variable frequency compressor. The air conditioning unit also comprises a plurality of frequency converters for controlling the frequency change of the compressors. The input end of each frequency converter is connected to the controller by means of a first intermediate relay, and the output end thereof is connected to the compressor. A second intermediate relay is further connected between the input end of the first intermediate relay and the input end of the compressor in parallel. The controller controls on-off of the first intermediate relay and the second intermediate relay, and switching of a frequency conversion mode and a fixed frequency mode of the compressor is achieved. When any refrigeration circulation loop breaks down, the second intermediate relay is disconnected, the first intermediate relay is attracted, and the compressor operates in the frequency conversion mode under the control of the frequency converter.

## Description

This application claims priority to Chinese Patent Application No.202210417226.6, titled "ACTIVE REDUNDANT AIR CONDITIONING UNIT AND CONTROL METHOD", filed on April 20, 2022 with the China National Intellectual Property Administration, which is incorporated herein by reference in its entirety.

### FIELD

The present disclosure relates to the technical field of air conditioning products, and in particular to an air conditioning unit with active redundancy and a method for controlling an air conditioning unit with active redundancy.

### BACKGROUND

With the development of rail vehicle technology, train units have become a first choice for traveling because of advantages such as high speed, convenience and comfort. In order to improve the comfort level during traveling, train units and other rail vehicles are arranged with on-board air conditioning units. In the conventional technology, the common on-board air conditioning units include multiple compressors, each of the compressors means an independent refrigerating circulation circuit, which is implemented by a constant frequency compressor with high reliability. In a case that there is a fault in one of the refrigerating circulation circuits, refrigeration output is reduced, which indicates that the air conditioning unit is operating in a degraded mode, resulting in compromised comfort level of the vehicle. In another technical solution of the conventional technology, variable frequency air conditioning unit are configured for the rail vehicle, each of the variable frequency air conditioning units includes multiple independent refrigerating circulation circuits, each of the refrigerating circulation circuit includes a variable frequency compressor, which can implement multi-level adjustment. In a case that there is a fault in one of the refrigerating circulation circuits, the compressors in the remaining circuits operate at an increased frequency to ensure refrigeration output. This method can take refrigeration output amount before the malfunction into consideration to ensure that the refrigeration output amount is unchanged, thereby ensuring the comfort level. Nevertheless, the variable frequency air conditioning has a significant number of electrical components, causing too many fault points.

To meet the demand of the user that a single fault point in an air conditioning system does not affect the indoor temperature, it is required to consider the application of variable frequency air conditioning and further ensure reliability.

### SUMMARY

An objective of the present disclosure is to overcome the above problems and disadvantages. Firstly, an air conditioning unit with active redundancy is provided. Secondly, a method for controlling an air conditioning unit with active redundancy is provided. In this way, switching between a constant frequency mode and a variable frequency mode of the air conditioning unit can be performed, which can increase the frequencies of the compressors in a case that there is a fault in any one of the refrigerating circulation circuits, thereby ensuring the indoor temperature and comfort level.

To this end, in a first aspect, an air conditioning unit with active redundancy is provided according to the present disclosure. The air conditioning unit uses technical solutions as follows.

An air conditioning unit with active redundancy includes: a controller; and multiple refrigerating circulation circuits which are independent from each other, each refrigerating circulation circuit comprises at least a variable frequency compressor, where the air conditioning unit with active redundancy further comprises: multiple frequency converters, where each of the multiple frequency converters is configured to control frequency change of the compressor, an input terminal of each of the frequency converters is connected to the controller through a first intermediate relay, and an output terminal of each of the frequency converters is connected to the compressor, a second intermediate relay is connected in parallel between an input terminal of the first intermediate relay and an input terminal of the compressor; and the controller is configured to control the first intermediate relay and the second intermediate relay to be turned on or turned off to switch the compressor between a variable frequency mode and a constant frequency mode, so that the second intermediate relay is turned off and the first intermediate relay is turned on to enable the compressor to operate in the variable frequency mode under control of the frequency converter in a case that there is a fault in any one of multiple refrigerating circulation circuits.

In an embodiment, the air conditioning unit further includes a circuit breaker is connected in series between the input terminal of the each first intermediate relay and an output terminal of the controller.

In an embodiment, the air conditioning unit further includes a detection device, configured to detect a fault state of each of the refrigerating circulation circuits.

In an embodiment, the second intermediate relay is controlled to be turned on and the first intermediate relay is controlled to turned off to enable the compressor to operate in the constant frequency mode, in a case that the refrigerating circulation circuit operates in a stable state.

A second objective of the present disclosure is to provide a method for controlling an air conditioning unit with active redundancy, which uses technical solutions as follows.

A method for controlling an air conditioning unit with active redundancy, where the air conditioning unit comprises a controller and multiple refrigerating circulation circuits which are independent from each other and connected in parallel, each refrigerating circulation circuit comprises a variable frequency compressor, where the air conditioning unit with active redundancy further comprises multiple frequency converters, an input terminal of each of the frequency converters is connected to the controller through a first intermediate relay, and an output terminal of each of the frequency converters is connected to the compressor, a second intermediate relay is connected in parallel between an input terminal of the first intermediate relay and an input terminal of the compressor; the method comprises: controlling the first intermediate relay to be turned off and the second intermediate relay to be turned on to enable the compressor to operate in a constant frequency mode in a case that an ambient temperature is less than T1 in a refrigerating mode or the ambient temperature is greater than T2 in a heating mode; and controlling, by the controller, the first intermediate relay to be turned on and the second intermediate relay to be turned off to enable the frequency converter to control the compressor to operate in a high frequency mode on detecting that there is a fault in any one of the refrigerating circulation circuits.

In an embodiment, the method further includes: controlling, by the controller, the first intermediate relay to be turned on and the second intermediate relay to be turned off to enable the compressor to operate in a variable frequency mode under the high frequency mode, in a case that the air conditioning unit is powered on for a first time; controlling, by the controller, the first intermediate relay to be turned on and the second intermediate relay to be turned off to enable the frequency converter to control change of an operating frequency of the compressor to enable the compressor to operate in the variable frequency mode, in a case that the ambient temperature is greater than or equal to T1 in the refrigerating mode or the ambient temperature is less than or equal to T2 in the heating mode; and controlling, by the controller, the first intermediate relay to be turned off and the second intermediate relay to be turned on to enable the compressor to operate in the constant frequency mode in a case that the ambient temperature is less than T1 in the refrigerating mode or the ambient temperature is greater than T2 in the heating mode.

In an embodiment, the method further includes: controlling each compressor to start at an interval apart from each other in a case that the air conditioning unit is powered on; controlling a frequency of the each compressor to be increased to a first frequency at a predetermined rate while switching the each compressor from off to on; and adjusting the frequency of the each compressor to a target value after controlling the frequency to stay at the first frequency for a predetermined time period.

In an embodiment, the controller includes a temperature control module and a PI module, the method further includes: calculating an action value Tacu based on collected fresh air temperature, added air temperature and supply air temperature; and determining an action of the compressor based on a preset logic.

In an embodiment, where the calculating an action value Tacu based on collected fresh air temperature, added air temperature and supply air temperature includes:
obtaining a difference △TRaum between an average indoor temperature CATavg and a set indoor temperature CAR SP; inputting the difference △TRaum into the PI module to performing P and I calculation; adding the result of the P calculation and the result of the I calculation to obtain TP+I; and inputting the TP+I into the temperature control module in the controller to obtain the action value Tacu from calculation in combination with the fresh air temperature and the supply air temperature.

In an embodiment, the preset logic includes: operating frequency values of each compressor corresponding to the action value Tacu within different ranges in a case that the each compressor operates is in a normal state, operating frequency values of the each compressor corresponding to the action value Tacu within different ranges in a case that at least one compressor is in a fault state, and operating frequency values of the each compressor corresponding to the action value Tacu within different ranges in a case that an air conditioning of driver compartment is in a fault state.

Based on the above description, an air conditioning unit with active redundancy and a method for controlling an air conditioning unit with active redundancy are provided according to the present disclosure, compared with the conventional technology, which have technical advantages as follows.

The variable frequency compressor applicable for on-board power system can be used as a constant frequency compressor in daily applications. In a case that there is a fault in one of the compressors, the frequency converters can sully power for the remaining compressors. By increasing the frequency of the power supply, the operation load of the compressors are enhanced to ensure the heat exchange output to remain the same, thereby ensuring the comfort level of the indoor environment.

Since the frequency converter can start in a short time through the controller and intermediate relay, it can ensure the quality and service life of the frequency converter and the charging and discharging process of the frequency converter, thereby ensuring the reliability of the frequency converter.

### BRIEF DESCRIPTION OF THE DRAWINGS

Figure 1 is a schematic diagram of a control system of an air conditioning unit with active redundancy according to an embodiment of the present disclosure; and
Figure 2 is a schematic diagram of a control logic of an air conditioning unit with active redundancy according to an embodiment of the present disclosure;
   where, intermediate relay K1, intermediate relay K2, intermediate relay K3, intermediate relay K4, intermediate relay K5, intermediate relay K6, intermediate relay K7, intermediate relay K8, circuit breaker Q1, circuit breaker Q2, circuit breaker Q3, circuit breaker Q4, controller 1, frequency converter 2, compressor 3, indoor temperature sensor 4, fresh air temperature sensor 5, supply air temperature sensor 6, PI module 7.

### DETAILED DESCRIPTION

The present disclosure is further described in detail hereinafter with reference to the drawings and embodiments.

According to the present disclosure, an air conditioning unit with active redundancy is provided, including a controller 1 and multiple refrigerating circulation circuits which are independent from each other, each refrigerating circulation circuit includes at least a variable frequency compressor 3, and the air conditioning unit with active redundancy further includes multiple frequency converters 2, where each of the multiple frequency converters 2 is configured to control frequency change of its corresponding compressor 3, respectively. An input terminal of each frequency converter 2 is connected to the controller 1 through a first intermediate relay. An output terminal of each frequency converter 2 is connected to its corresponding compressor 3, and a second intermediate relay is connected in parallel between an input terminal of the first intermediate relay and an input terminal of the compressor 3. The controller 1 is configured to control the first intermediate relay and the second intermediate relay to be turned or turned off to implement switching of the compressor 3 between a variable frequency mode and a constant frequency mode, so that the second intermediate relay is turned off and the first intermediate relay is turned on to enable the compressor to operate in the variable frequency mode under control of the frequency converter 2 in a case that there is a fault in any one of multiple refrigerating circulation circuits.

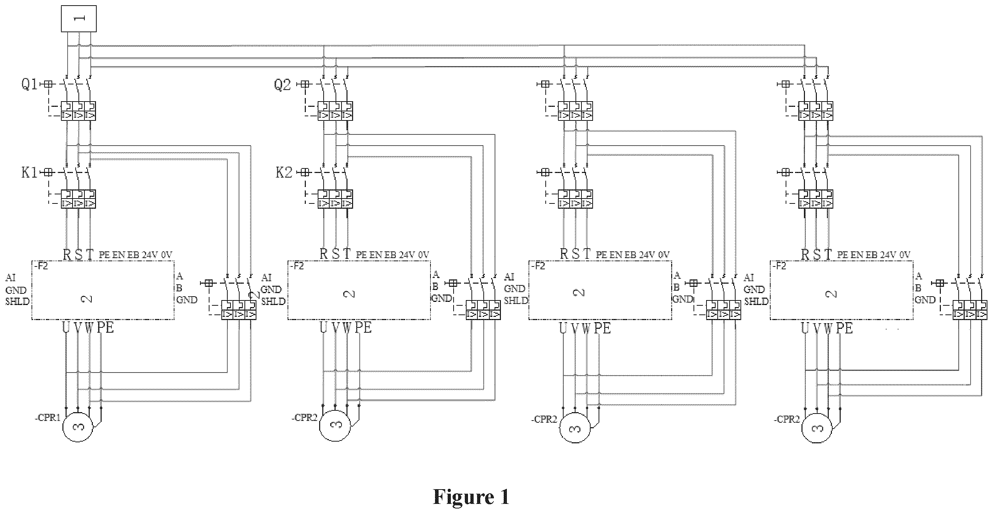

As an example, an air conditioning unit for the rail vehicle is provided to illustrate the specific composition of the air conditioning unit with active redundancy provided by the present disclosure. The air conditioning unit includes two air conditioning systems, each air conditioning system includes two refrigerating circulation circuits, each refrigerating circulation circuit includes a compressor, an evaporator, a condenser and a four-way valve connected via pipelines, in which the refrigerant runs in the circulation circuit to implement heat exchange. Each compressor 3 is electrically connected to controller 1, and each compressor 3 is connected to a three-phase power supply to receive electric power, so that the compressors are connected in parallel. As shown in Figure 1, in this embodiment, the air conditioning unit includes four refrigerating circulation circuits, each refrigerating circulation circuit includes a compressor 3. The four compressors 3 are connected in parallel via circuits and connected to the three-phase power supply. The three-phase power supply supplies power to the compressor 3 through the controller 1. Each compressor 3 is a variable frequency compressor that is applicable to the vehicle power supply system (e.g., 3N400V, 50Hz). Each compressor 3 is connected to a frequency converter 2 and is powered by the frequency converter 2. The frequency converter 2 controls and adjusts the frequency change of compressor 3 to control the temperature in the vehicle to maintain a relatively stable temperature range, thereby improving the comfort level of the environment in the vehicle. As shown in Figure 1, a connection between the leftmost compressor 3 and the three-phase power supply is provided as an example, where the output terminal of the frequency converter 2 is connected to the input terminal of the compressor 3, and the input terminal of the frequency converter is connected to controller 1 through an intermediate relay K1. An intermediate relay K5 is connected in parallel between an input terminal of intermediate relay K1 and an output terminal of frequency converter 2. Further, the input terminal of the intermediate relay K1 is connected to the three-phase power supply through the circuit breaker Q1. Controller 1 controls the circuit breaker Q1, the intermediate relay K1 and the intermediate relay K5 to be turned on or off, to control the operating state and operating mode of the refrigerating circulation circuit. When the controller 1 controls the circuit breaker Q1 to be turned on, and the entire refrigerating circulation circuit is powered on to operate. In a case that the intermediate relay K1 is turned on and the intermediate relay K5 is turned off, the frequency converter 2 is immediately powered on and started, ensuring the charging and discharging process of the frequency converter 2 and the reliability of frequency converter 2. The frequency converter 2 supplies power to the compressor 3, and controls compressor 3 to operate in a variable frequency mode. In a case that the intermediate relay K1 is turned off and the intermediate relay K5 is turned on, the frequency converter 2 is powered off, and the controller 1 directly supplies power to compressor 3 to control compressor 3 to operate in the constant frequency mode. The compressors 3 in other refrigerating circulation circuits are connected to controller 1 in the same manner. In other words, the input terminal of compressor 3 in the second refrigerating circulation circuit is connected to the frequency converter 2 and intermediate relay K2 in sequence, and an intermediate relay K6 is connected in parallel between the input terminal of intermediate relay K2 and the output terminal of the frequency converter 2. The input terminal of compressor 3 in the third refrigerating circulation circuit is connected to frequency converter 2 and intermediate relay K3 in sequence, and an intermediate relay K7 is connected in parallel between the input terminal of intermediate relay K3 and the output terminal of frequency converter 2. The input terminal of compressor 3 in the fourth refrigerating circulation circuit is connected to the frequency converter 2 and the intermediate relay K4 in sequence, and an intermediate relay K8 is connected in parallel between the input terminal of intermediate relay K4 and the output terminal of frequency converter 2. Input terminals of the intermediate relay K2, the intermediate relay K3 and the intermediate relay K4, and input terminals of the intermediate relay K6, the intermediate relay K7 and the intermediate relay K8 are connected to the controller 1 respectively through a circuit breaker Q2, a circuit breaker Q3 and a circuit breaker Q4. Where, the intermediate relays K1 to K5 is first intermediate relays, intermediate relays K6 to K8 is second intermediate relays. The controller 1, according to built-in control logic, respectively controls each circuit breaker to be turned on or off, to control the operating state of the refrigerating circulation circuit, and controls the operating mode of the air conditioning unit by controlling the first intermediate relay and the second intermediate relay to be turned on or off. The turn-on and turn-off states of the first intermediate relay and that of the second intermediate relay are opposite to each other. In other words, in a case that the first intermediate relay is turned on, the second intermediate relay is turned off. In a case that the second intermediate relay is turned on, the first intermediate relay is turned off. The air conditioning unit further includes a detection device. The detection device may detect the fault state of each refrigerating circulation circuit. In a case that there is a fault in any one of the refrigerating circulation circuits and fail to exchange heat, the detection device sends the fault state to controller 1, and controller 1 controls the circuit breaker of the refrigerating circulation circuit to be turned off, and controls the first intermediate relays of the remaining sets of refrigeration cycle circuits to be turned on, the second intermediate relays to be turned off, and the frequency converter 2 controls the compressor 3 to increase frequency according to the built-in control logic, and operates in the variable frequency mode to prevent the overall heat exchange of the air conditioning unit from being reduced in a case that there is a fault in any one of the refrigerating circulation circuits. When the indoor temperature is relatively stable, the controller 1 controls the first intermediate relay to be turned off and the second intermediate relay to be turned on according to the predetermined control logic. In this way, each compressor 3 operates in the constant frequency mode, and the air conditioning unit outputs relatively stable heat exchange.

A method for controlling an air conditioning unit with active redundancy is further provided in the present disclosure includes as follows.

In a case that the air conditioning unit operates for a first time and/or before the air conditioning unit operates per time, the first intermediate relays, the second intermediate relays and the circuit breakers are self-tested respectively to confirm that functions of the first intermediate relays, the second intermediate relays and the circuit breakers are normal and in the initial state. In other words, circuit breakers Q1 to Q4 are in a turn-on state. The first intermediate relays are in the turn-on state, the second intermediate relays are in the turn-off state, and the on-off function of the first intermediate relays and the second intermediate relays are normal, to ensure that the frequency converter 2 can operate normally, and can switch the compressor between the constant frequency mode and variable frequency mode.

In a case that the rail vehicle is powered on to operate and the outdoor temperature sensor of the air conditioning unit operates, it is determined that it is required to turn on the air conditioning unit for heat exchange in the vehicle (hereafter referred to as indoors), the air conditioning unit is powered on and operates. The controller 1 controls the intermediate relays K1, K2, K3 and K4 to be turned on, and each frequency converter 2 is powered on to control the compressors 3 to operate in the variable frequency mode under the high frequency mode, thereby achieving the purpose of rapidly reducing the indoor temperature.

In a case that the ambient temperature is detected to be greater than or equal to T1 (T1 is the high temperature limit) in the refrigerating mode or in a case that the ambient temperature is detected to be less than or equal to T2 (T2 is the low temperature limit) in the heating mode, the demand for indoor heat exchange is high and the heat load is significant. Controller 1 controls the intermediate relays K1, K2, K3, and K4 to continue to be turned on, and controls the operating frequency changes of compressors 3 through the frequency converters 2, to implement the control of indoor temperature.

In a case that the ambient temperature is detected to be less than T1 under the refrigerating mode, or in a case that the ambient temperature is detected to be greater than T2 under the heating mode, the demand for indoor heat exchange is decreased and the heat load is reduced, where the indoor temperature is relatively stable. In this case, the controller 1 controls the intermediate relays K1, K2, K3, and K4 to be turned off, and controls the intermediate relays K5, K6, K7, and K8 to be turned on. The air conditioning unit operates in the constant frequency mode, and each compressor operates at a stable frequency to output the heat exchange quantitatively. The indoor temperature is controlled by the start and stop of compressors 3.

In a case that the ambient temperature is detected to be less than T1 in the refrigerating mode, or in a case that the ambient temperature is detected to be greater than T2 in the heating mode, the air conditioning unit operates in the constant frequency mode. In a case that the detection device detects that there is a fault in any one of the refrigerating circulation circuits, the controller 1 controls the circuit breaker of the malfunctioned refrigerating circulation circuit to be turned off, and controls the intermediate relays K1, K2, K3, and K4 to be turned on again, and controls the intermediate relays K5, K6, K7, and K8 to be turned off. In this case, the frequency converter 2 is controlled to be powered on again. The controller 1, according to the preset control logic, controls the air conditioning unit to re-operate in the frequency conversion mode, and the compressors in the variable frequency mode operate under the high frequency mode, ensuring that the overall heat exchange output of the air conditioning unit is unchanged, or only slightly reduced, thereby preventing the fault of the refrigerating circulation circuit from impacting the indoor temperature.

When the controller 1 and/or frequency converters 2 controls the air conditioning unit to operates in the variable frequency mode, according to the control logic of compressor frequency, each compressor 3 is directly driven by corresponding frequency converter 2, the frequency converter 2 provides overcurrent protection to compressor 3 to prevent the compressor 3 from being burned. In a case that the air conditioning unit is applied on the rail vehicle, when the refrigerating circulation circuits operate, a supply fan, a waste exhaust fan, a fresh air fan and a condensing fan are started first. Subsequently, the compressor 3 is started according to the control logic, which finally achieves a preferable target operating frequency:
a. The compressor is started: each compressor in the vehicle is started an interval of 3s to 5s apart from each other. In a case that the compressor switches from off to on, the frequency is required to be increased to a first predetermined frequency and operates continuously for a predetermined time under the first predetermined frequency, and then the frequency is increased to a target value at a predetermined rate. For example, in a case that the compressor 3 switches from off to on, the operating frequency of the compressor is increased by 40Hz to 60Hz, and a preferable frequency is 50Hz, the compressor 3 maintains operating at this frequency for 2min to 5min, a preferable time length is 3min, and then the frequency is adjusted to the target value.
b. The frequency change rate of the compressor includes: increasing rate of frequency and decreasing rate of frequency ≤ 5Hz/s; where the time length required by the compressor from starting to increasing to 50Hz is set to 8s to 15s, and 10s is preferable.
c. The compressor is shut down: where the frequency of the compressor 3 first decreases from the current operating frequency to a second predetermined frequency at the preset decreasing rate, such as 30 to 60Hz, 40Hz is preferable, and then the compressor 3 shuts down directly.
d. Limits for the compressor operates in a constant frequency mode includes: in a case that the air conditioning unit operates in the constant frequency mode, the compressor operates in a frequency ranged from 40 to 60Hz.

When the air conditioning unit is initially started up or when the outdoor ambient temperature is greater than or equal to T1 (in the refrigerating mode) or less than or equal to T2 (under the heating mode), the heat load is relatively significant, the air conditioning unit operates in the variable frequency mode to implement rapid indoor cooling/heating and improve the comfort level. Under variable frequency mode, conventional methods may be used in combination with the above control data (e.g., the content in a, b, and c) to implement variable frequency control. In a case that the air conditioning unit operates in the constant frequency mode, the controller 1 controls each compressor 3 to operate in a frequency ranged from 40 to 60Hz. The specific operating frequency may be determined based on the action value Tacu obtained by performing PI calculation on the obtained fresh air temperature, supply air temperature, indoor temperature and predetermined temperature. Therefore, the air conditioning unit further includes a fresh air temperature sensor 5, a supply air temperature sensor 6 and an indoor temperature sensor 4 for collecting the fresh air temperature, supply air temperature and indoor temperature respectively. In addition, PI module 7 and control logic program of the compressor frequency are preset in the controller 1. The obtained temperature values are inputted to PI module 7 to calculate the action value, and the refrigerating demand is defined based on the action value. Subsequently, the actual operating frequency of the compressor is adjusted based on the preset control logic to implement the adjustment in automatic cooling output in variable frequency. The PI calculation process of the action value Tacu includes as follows.

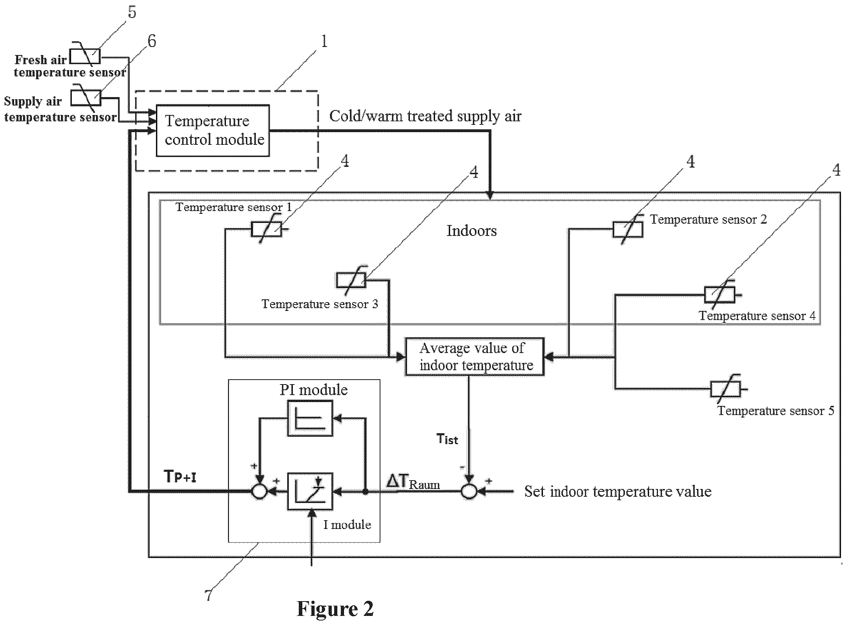

As shown in Figure 2, multiple indoor temperature sensors 4 are set indoors to detect the real-time temperature values at different positions. Each sensor transmits the real-time value of indoor temperature to the controller 1. The average value CATavg of indoor temperature is obtained. A difference between the average indoor temperature value CATavg and the set indoor temperature value CAR SP is calculated, the difference ΔTRaum between the actual indoor average temperature and the set temperature is obtained and inputted into PI module 7. In this embodiment, in the PI operation software code, P is 2000 and I is 500. After the calculation of P (proportion) and I (integral), the TP value and I value are obtained respectively, then an addition calculation is performed on the TP value and I value to obtain TP+I. The value TP+I is finally transmitted to the temperature control module (ACU-Control) built in the controller 1, in combination with the real-time data of the fresh air temperature and the supply air temperature detected by the fresh air temperature sensor and the supply air temperature sensor, the final calculation is performed to obtain the action value Tacu, and the action frequency of compressor 3 is determined by the preset control logic. The control logic module of air conditioning is as shown in Figure 2. In the field of air conditioning, using PI module for data calculation is a conventional technology, and any calculation method that may appear now or in the future is within the protection scope of the present disclosure.

In a case that the air conditioning unit operates in the constant frequency mode, the controller 1 directly controls the operation and operating frequency of the compressor 3. The correspondence table of an action value Tacu and an action frequency of each compressor 3 of the air conditioning unit are pre-stored in the controller 1, so that the action value Tacu falling in different ranges may correspond to different frequency of the constant frequency operation of the compressor. In an embodiment, there are multiple correspondence tables. In this case, the correspondence tables include the action value Tacu within different ranges and the common frequency values of the four compressors corresponding to the different ranges when all four compressors operate normally; and the action value Tacu within different ranges and frequency values of each compressor corresponding to the different ranges when one compressor malfunctions (i.e., one refrigerating circulation circuit malfunctions); the action value Tacu within different ranges and frequency values of each compressor corresponding to the different ranges when two compressors malfunction (i.e., two refrigerating circulation circuits malfunction); and the action value Tacu within different ranges and frequency values of each compressor corresponding to the different ranges when three compressors malfunction (i.e., three refrigerating circulation circuits malfunction).

As an example, the air conditioning unit of a compartment of a rail vehicle is provided herein. On the rail vehicle, the air conditioning unit of each vehicle includes two outdoor units and matching indoor units. Each outdoor unit includes two refrigerating circulation circuits, and the two refrigerating circulation circuits are separated independently, while the two compressors share a condenser. In other words, each two refrigerating circulation circuits use a same condenser. In this mode of air conditioning unit, a correspondence relationship, which is pre-stored in the controller and/or frequency converter, between an action value Tacu within different ranges and an action frequency of the compressor includes as follows.

1. In a case that all refrigerating circulation circuits operate normally and the air conditioning unit operates in the constant frequency mode. A correspondence relationship between the action value Tacu and operating frequency of the compressor obtained by the PI calculation method shown in Figure 2 is shown in Table 1.

**Table 1: Correspondence table between the action value Tacu and the operating frequency of the compressor (while operating normally)**

| **Number** | **T_{acu}** | **Corresponding compressor frequency (Hz) * Quantity** |
|---|---|---|
| 1 | T_{acu}>1.2 | 60*4 |
| 2 | 1.2 ≥ T_{acu} >0.6 | 55*4 |
| 3 | 0.6≥ T_{acu} >0 | 50*4 |
| 4 | 0≥ T_{acu} >-0.6 | 45*4 |
| 5 | -0.6≥ T_{acu}>-1.2 | 40*4 |
| 6 | T_{acu} <-1.2 | Ventilation mode |

In a case that all refrigerating circulation circuits operate normally, the four compressors operate in the same frequency and quantitatively output heat exchange and the indoor temperature is controlled by the start and stop of compressors 3. As shown in Table 1, the greater the action value Tacu, the higher the outdoor temperature is (in this case, it is in the refrigerating mode; if it is in the heating mode, the greater the action value Tacu, the lower the outdoor temperature is), i.e., the higher the heat load is. Hence, the operating frequency of compressor 3 is higher. In a case that the action value Tacu is less than -1.2, it indicates that the indoor and outdoor temperatures are relatively close and within a comfortable temperature range, it is not required to refrigerate or heat, and the air conditioning unit operates only in a ventilation mode to provide fresh air to the inside of the compartment and maintain the pressure difference between the inside and the outside of the compartment.

2. In a case that there is a fault in any one of refrigerating circulation circuit, the operating frequencies of the remaining compressors are controlled by using the correspondence relationship shown in Table 2.

**Table 2: Correspondence table between the action value Tacu and the operating frequency of the compressor (when one refrigerating circulation circuit malfunctions)**

| **Number** | **T_{acu}** | **Corresponding compressor frequency (Hz) * Quantity** |
|---|---|---|
| 1 | T_{acu}>1.2 | 70*2+80*1 |
| 2 | 1.2≥ T_{acu}>0.6 | 65*2+75*1 |
| 3 | 0.6≥ T_{acu}>0 | 60*2+70*1 |
| 4 | 0≥ T_{acu} >-0.6 | 55*2+65*1 |
| 5 | -0.6≥ T_{acu}>-1.2 | 50*2+60*1 |
| 6 | T_{acu} <-1.2 | Ventilation mode |

As shown in Table 2, Tacu >1.2 is provided as an example. When Tacu >1.2, the operating frequency of compressor in another refrigerating circulation circuit sharing a condenser with the faulty refrigerating circulation circuit is 80Hz, and the operating frequencies of two compressors in the other two refrigerating circulation circuits sharing a condenser are 70Hz. In a case that Tacu falls within other ranges, selection of the operating frequency of each compressor is the same. Combined with Table 1, in a case that Tacu >1.2, the operating frequency of each compressor is 60Hz when all the refrigerating circulation circuits operate normally. In a case that one refrigerating circulation circuit malfunctions, the operating frequency of the remaining compressor are increased synchronously. Correspondingly, the operating frequency of the compressor of another refrigerating circulation circuit sharing a condenser with the faulty refrigerating circulation circuit is higher than operating frequencies of other two compressors. In this embodiment, compared with a case that all refrigerating circulation circuits operate normally, when the action value Tacu is located within the same range and one refrigerating circulation circuit malfunctions, the operating frequency of the compressor in another refrigerating circulation circuit sharing a condenser with the faulty refrigerating circulation circuit is increased by 20Hz, while the operating frequencies of other two compressors are increased by 10Hz each. Similarly, in a case that Tacu < -1.2, the air conditioning unit operates in the ventilation mode without starting or changing the operating frequency of the compressors.

3. In a case that there are faults in any two of refrigerating circulation circuits, the operating frequencies of the remaining compressors are controlled by using the correspondence relationship shown in Table 3.

**Table 3: Correspondence table between the action value Tacu and the operating frequency of the compressor (when two refrigerating circulation circuits malfunction)**

| **Number** | **T_{acu}** | **Compressor frequency of (Hz) * Quantity of operating compressors** |
|---|---|---|
| 1 | T_{acu}>1.2 | 70*2 |
| 2 | 1.2≥ T_{acu}>0.9 | 65*2 |
| 3 | 0.9≥ T_{acu}>0.7 | 60*2 |
| 4 | 0.7≥ T_{acu}>0.5 | 55*2 |
| 5 | 0.5≥ T_{acu}>0.3 | 50*2 |
| 6 | 0.3≥ T_{acu}>0.1 | 45*2 |
| 7 | 0.1≥ T_{acu}>0 | 40*2 |
| 8 | T_{acu} <0 | Ventilation mode |

In this mode, there are two scenarios. One scenario is that there is a fault in one refrigerating circulation circuit of each of the two outdoor units. Another is that two refrigerating circulation circuits malfunction in the same outdoor unit. The two scenario can cause a serious shortage of heat exchange. In this case, it is required to accurately regulate the operating frequency of the compressors. Therefore, the action value Tacu changes from being divided into 6 continuous ranges within the value range of (-1.2, 1.2), to being divided into 8 continuous ranges within the value range of (0, 1.2). In this way, the division is refined and can accurately control the indoor temperature. In a case that the action value T <0, the air conditioning unit is controlled to enter the ventilation mode.

4. In a case that there are faults in three refrigerating circulation circuits, the operating frequency of the remaining one compressor is controlled by using the correspondence relationship shown in Table 4.

**Table 4: Correspondence table between the action value Tacu and the operating frequency of the compressor (when three refrigerating circulation circuits malfunction)**

| **Number** | **T_{acu}** | **Compressor frequency of (Hz) * Quantity of operating compressors** |
|---|---|---|
| 1 | T_{acu}>1.2 | 80*1 |
| 2 | 1.2≥ T_{acu}>0.9 | 75*1 |
| 3 | 0.9≥ T_{acu}>0.7 | 70*1 |
| 4 | 0.7≥ T_{acu}>0.5 | 65*1 |
| 5 | 0.5≥ T_{acu}>0.3 | 60*1 |
| 6 | 0.3≥ T_{acu}>0.1 | 55*1 |
| 7 | 0.1≥ T_{acu}>0 | 50*1 |
| 8 | T_{acu} <0 | Ventilation mode |

In this mode, three refrigerating circulation circuits are in the fault state, causing the heat exchange decreases sharply. Combined with Table 3, the same action value Tacu value range and the corresponding range division are set as the mode that two refrigerating circulation circuits malfunction. The difference is that the operating frequency of the compressor corresponding to the same range increases by 10Hz.

Based on the above description, in a case that the air conditioning unit operates in constant frequency mode, the corresponding operating frequency of each compressor is selected based on the operating state of each refrigerating circulation circuit and the action value Tacu obtained by temperature calculation. In a case that one, two or three refrigerating circulation circuits malfunction, the correspondence table is selected based on the number of faulty refrigerating circulation circuits. Based on the range where the calculated Tacu located in, the corresponding compressor frequency is selected and the compressor is controlled to execute the action. In a case that all the four refrigerating circulation circuits malfunction, the air conditioning unit alarms and prompts. In the process of constant frequency operation, when the action value Tacu changes to be in another range and stays in the new range in a duration exceeding the predetermined value, the controller re-controls and adjusts the operating frequency of the compressor based on the range where the changed action value Tacu is located. While entering the constant frequency mode, the four refrigerating circulation circuits operate normally, and the corresponding operating frequencies of the compressors are selected according to Table 1. In the process of operation, after receiving the fault information sent by the detection device, the controller, directly or after the interval of predetermined time, synchronously re-adjusts and controls the operating frequencies of the compressors of other normal refrigerating circulation circuits based on the range where the real-time action value Tacu located and the correspondence tables. In this way, it can improve the operating frequency of each compressor to eliminate sudden changes in indoor temperature.

According to the present disclosure, a correspondence table between the action value Tacu and the operating frequency of the air conditioner in the driver compartment is further provided. Due to the small space in the driver compartment, the demand for heat exchange is insignificant, the air conditioning in the driver compartment usually only includes a refrigerating circulation circuit. Similarly, the connection mode of a compressor, a controller, a frequency converter, a circuit breaker and an intermediate relay in the refrigerating circulation circuit of the air conditioning in the driver compartment is as described above. When the air conditioning in the driver compartment is powered on and initially operates, the air conditioning operates in the variable frequency mode as described above, and the control methods for increasing the operating frequencies and the increasing rates are as described above. In a case that the air conditioning in the driver compartment enters the constant frequency mode, the action value Tacu is calculated, where the operating frequency of the compressor in the driver compartment is controlled in the constant frequency mode based on the correspondence relationship shown in Table 5.

**Table 5: Correspondence table between the action value Tacu and the operating frequency of the compressor of the air conditioning in the driver compartment**

| **Number** | **Temperature changing range** | **Corresponding compressor frequency (Hz) * Quantity** |
|---|---|---|
| 1 | T_{acu}>1.2 | 60 |
| 2 | 1.2≥ T_{acu}>0.6 | 55 |
| 3 | 0.6≥ T_{acu}>0 | 50 |
| 4 | 0≥ T_{acu}>-0.6 | 45 |
| 5 | -0.6≥ T_{acu}>-1.2 | 40 |
| 6 | T_{acu} <-1.2 | Ventilation mode |

In an embodiment, an air conditioning unit of a compartment of a rail vehicle with four refrigerating circulation circuits is provided as an example, to illustrate the connection and control relationship of compressors, frequency converters and the controller of the air conditioning unit according to the present disclosure. In a case that there is a fault in at least one refrigerating circulation circuit, the operating frequencies of other compressors are correspondingly increased. In practical applications, the air conditioning unit provided according to the present disclosure can be applied to various environments, such as commercial air conditioning, multi-connected split air conditioning and the like. Hence, the foregoing shall not be regarded as a limitation of the application scope of the present disclosure. In addition, as mentioned above, the air conditioning unit includes four refrigerating circulation circuits. The compressor of each refrigerating circulation circuit is connected to the controller 1 according to the circuit diagram shown in Figure 1, which is directly or indirectly controlled by the operation of the controller. Each two refrigerating circulation circuits share a condenser. In practical applications, based on the space of heat exchange and its demand, the number of refrigerating circulation circuits and the number of compressors included in each refrigerating circulation circuit are determined. Where, each refrigerating circulation circuit may include two or more compressors connected in parallel. Based on the number of refrigerating circulation circuits, the number of compressors and the variable frequency capacity of compressors, the range division of the action value Tacu in each corresponding table and the corresponding operating frequency of the compressor of each range are determined. In addition, in a case that there is a fault, the frequency increase values of other compressors while operating in an increased frequency serve as arranging the air conditioning unit with redundant compressors, thereby achieving the redundant design of the air conditioning unit.

Based on the above description, an air conditioning unit with active redundancy and a method for controlling an air conditioning unit with active redundancy are provided according to the present disclosure. Comparing with the conventional technology, technical advantages of the present disclosure are as follows.

The variable frequency compressor applicable for on-board power system can be used as a constant frequency compressor in daily applications. In a case that there is a fault in one of the compressors, the frequency converters can supply power to the remaining compressors. By increasing the frequency of the power supply, the operation load of the compressors are enhanced to ensure the heat exchange output to remain the same, thereby ensuring the comfort level of the indoor environment.

The frequency converter can start in a short time through the controller and intermediate relay, which ensures the quality and service life of the frequency converter and the charging and discharging process of the frequency converter, thereby ensuring the reliability of the frequency converter.

Based on the above description, similar technical solutions can be derived with reference to the content of solutions provided herein. Any content that does not depart from the technical solutions of the present disclosure, any simple modifications, equivalent changes and modifications made to the above embodiments in accordance with the technical essence of the present disclosure are still within the scope of the technical solutions of the present disclosure.

## Claims

1. An air conditioning unit with active redundancy, comprising:
a controller; and
a plurality of refrigerating circulation circuits which are independent from each other, each refrigerating circulation circuit comprises at least a variable frequency compressor, wherein the air conditioning unit with active redundancy further comprises:
a plurality of frequency converters, wherein each of the plurality of frequency converters is configured to control frequency change of the compressor, an input terminal of each of the frequency converters is connected to the controller through a first intermediate relay, and an output terminal of each of the frequency converters is connected to the compressor, a second intermediate relay is connected in parallel between an input terminal of the first intermediate relay and an input terminal of the compressor; and
the controller is configured to control the first intermediate relay and the second intermediate relay to be turned on or turned off to switch the compressor between a variable frequency mode and a constant frequency mode, so that the second intermediate relay is turned off and the first intermediate relay is turned on to enable the compressor to operate in the variable frequency mode under control of the frequency converter in a case that there is a fault in any one of the plurality of refrigerating circulation circuits.

2. The air conditioning unit with active redundancy according to claim 1, wherein a circuit breaker is connected in series between the input terminal of the each first intermediate relay and an output terminal of the controller.

3. The air conditioning unit with active redundancy according to claim 1, further comprising:
a detection device, configured to detect a fault state of each of the refrigerating circulation circuits.

4. The air conditioning unit with active redundancy according to any one of claims 1 to 3, wherein the second intermediate relay is controlled to be turned on and the first intermediate relay is controlled to turned off to enable the compressor to operate in the constant frequency mode, in a case that the refrigerating circulation circuit operates in a stable state.

5. A method for controlling an air conditioning unit with active redundancy,
wherein the air conditioning unit comprises a controller and a plurality of refrigerating circulation circuits which are independent from each other and connected in parallel, each refrigerating circulation circuit comprises a variable frequency compressor, wherein the air conditioning unit with active redundancy further comprises a plurality of frequency converters, an input terminal of each of the frequency converters is connected to the controller through a first intermediate relay, and an output terminal of each of the frequency converters is connected to the compressor, a second intermediate relay is connected in parallel between an input terminal of the first intermediate relay and an input terminal of the compressor;
the method comprises:
controlling the first intermediate relay to be turned off and the second intermediate relay to be turned on to enable the compressor to operate in a constant frequency mode in a case that an ambient temperature is less than T1 in a refrigerating mode or the ambient temperature is greater than T2 in a heating mode; and
controlling, by the controller, the first intermediate relay to be turned on and the second intermediate relay to be turned off to enable the frequency converter to control the compressor to operate in a high frequency mode on detecting that there is a fault in any one of the refrigerating circulation circuits.

6. The method for controlling the air conditioning unit with active redundancy according to claim 5, the method further comprises:
controlling, by the controller, the first intermediate relay to be turned on and the second intermediate relay to be turned off to enable the compressor to operate in a variable frequency mode under the high frequency mode, in a case that the air conditioning unit is powered on for a first time;
controlling, by the controller, the first intermediate relay to be turned on and the second intermediate relay to be turned off to enable the frequency converter to control change of an operating frequency of the compressor to enable the compressor to operate in the variable frequency mode, in a case that the ambient temperature is greater than or equal to T1 in the refrigerating mode or the ambient temperature is less than or equal to T2 in the heating mode; and
controlling, by the controller, the first intermediate relay to be turned off and the second intermediate relay to be turned on to enable the compressor to operate in the constant frequency mode in a case that the ambient temperature is less than T1 in the refrigerating mode or the ambient temperature is greater than T2 in the heating mode.

7. The method for controlling the air conditioning unit with active redundancy according to claim 6, the method further comprises:
controlling each compressor to start at an interval apart from each other in a case that the air conditioning unit is powered on;
controlling a frequency of the each compressor to be increased to a first frequency at a predetermined rate while switching the each compressor from off to on; and
adjusting the frequency of the each compressor to a target value after controlling the frequency to stay at the first frequency for a predetermined time period.

8. The method for controlling the air conditioning unit with active redundancy according to any one of claims 5 to 7, wherein the controller comprises a temperature control module and a PI module, the method further comprises:
calculating an action value Tacu based on collected fresh air temperature, added air temperature and supply air temperature; and
determining an action of the compressor based on a preset logic.

9. The method for controlling the air conditioning unit with active redundancy according to claim 8, wherein the calculating an action value Tacu based on collected fresh air temperature, added air temperature and supply air temperature comprises:
obtaining a difference △TRaum between an average indoor temperature CATavg and a set indoor temperature CAR SP;
inputting the difference △TRaum into the PI module to performing P and I calculation;
adding the result of the P calculation and the result of the I calculation to obtain TP+I; and
inputting the TP+I into the temperature control module in the controller to obtain the action value Tacu from calculation in combination with the fresh air temperature and the supply air temperature.

10. The method for controlling the air conditioning unit with active redundancy according to claim 8, wherein the preset logic comprises:
operating frequency values of each compressor corresponding to the action value Tacu within different ranges in a case that the each compressor operates is in a normal state, operating frequency values of the each compressor corresponding to the action value Tacu within different ranges in a case that at least one compressor is in a fault state, and operating frequency values of the each compressor corresponding to the action value Tacu within different ranges in a case that an air conditioning of driver compartment is in a fault state.
